# EUROPEAN PATENT APPLICATION

(11) **EP 1 050 696 A2**
(43) Date of publication of application: **08.11.2000**
(21) Application number: 00107059.8
(22) Date of filing: 04.04.2000
(51) Int. Cl.: F16F 9/48

(54) **Twin-piston shock absorber particularly for vehicle suspensions**

(30) Priority: 04.05.1999 IT BO990216
(71) Applicant: PAIOLI S.p.A., 40019 S. Agata Bolognese (Bologna) (IT)
(72) Inventor: Francia, Giancarlo, 40139 Bologna (IT)
(74) Representative: Modiano, Guido, Dr.-Ing.

(57) **Abstract**

A twin-piston shock absorber, particularly for vehicle suspensions, comprising a cylinder (2), a piston (6) which is fitted so that it can slide hermetically in the cylinder and is constituted by a stem (7) to the end of which a first end plate (10) and a second plate (11) are rigidly coupled, the plates being affected by ports (14) and by valve systems (15,16) for the passage of oil, the stem (7) having, at its base, an axial hole (17) which is connected to an oil passage port (18) arranged between the two plates (10,11), a conical pin (19) which is provided with means (20) for axial fitting on the bottom of the cylinder (2) and is adapted to enter the hole (17) of the stem (7), the gradual insertion of the conical pin (19) in the hole (17) of the stem (7) at the stroke limit of the piston (6) in the cylinder being adapted to produce a gradual hardening of the shock absorber, wherein at the inlet of the hole (17) of the stem (7) there is a seat (21) for the transversely movable coupling of a self-centering bushing (22) which, upon insertion of the pin (19), is adapted to be arranged so that its axis coincides with the axis of the pin (19).

## Description

The present invention relates to a twin-piston shock absorber particularly for vehicle suspensions.

Conventional twin-piston shock absorbers comprise a cylinder in which a piston can slide hermetically, the piston being constituted by a stem to the end of which an end plate and a second plate are rigidly coupled. Such plates are affected by ports and valve systems for the flow of the oil, and in some types, an axial conical pin is rigidly coupled to the bottom of the cylinder and is adapted to enter an axial hole of the base of the stem which is connected to an oil passage port arranged between the two plates: the gradual insertion of the conical pin in the hole at the stroke limit of the piston in the cylinder is adapted to produce gradual hardening of the shock absorber.

It has been observed that in the production of such shock absorbers the alignment of the conical pin with the axial hole of the stem is extremely important; this entails considerable costs for the manufacture of the components and for their assembly, especially if one wishes to affect the arrangement of the pin in the cylinder; moreover, it has been observed that it would be desirable to be able to adjust, according to requirements, the level at which the pin is fixed to the cylinder without having to disassemble the shock absorber.

The aim of the present invention is to obviate the above drawbacks and shortcomings of conventional devices, i.e., to provide a twin-piston shock absorber, particularly for vehicle suspensions, which allows perfect alignment of the pin with the hole of the stem and allows to vary the arrangement of the stem in the cylinder from outside.

Within the scope of this aim, an object of the present invention is to provide a twin-piston shock absorber which is simple, relatively easy to provide in practice, safe in use, effective in operation and relatively modest in cost.

This aim, this object and others which will become apparent hereinafter are achieved by a twin-piston shock absorber according to the present invention, particularly for vehicle suspensions, comprising a cylinder, a piston which is fitted so that it can slide hermetically in the cylinder and is constituted by a stem to the end of which a first end plate and a second plate are rigidly coupled, said plates being affected by ports and by valve systems for the passage of oil, said stem having, at its base, an axial hole which is connected to an oil passage port arranged between the first and second plates, and a conical pin which is provided with means for axial fitting on the bottom of the cylinder and is adapted to enter said hole of the stem, the gradual insertion of the conical pin in the hole of the stem at the stroke limit of the piston in the cylinder being adapted to produce a gradual hardening of the shock absorber, characterized in that at the inlet of the hole of the stem there is a seat for the transversely movable coupling of a self-centering bushing which, upon insertion of the pin, is adapted to be arranged so that its axis coincides with the axis of the pin.

Further characteristics and advantages of the present invention will become apparent from the following detailed description of a preferred but not exclusive embodiment of a twin-piston shock absorber particularly for vehicle suspensions according to the invention, illustrated only by way of non-limitative example in the accompanying drawings, wherein:

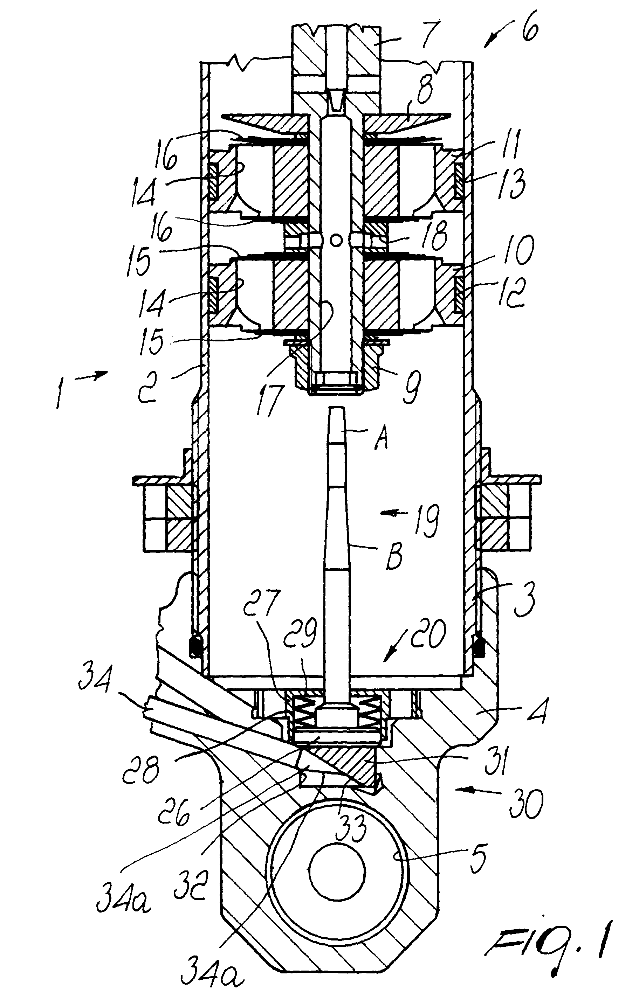

Figure 1 is a sectional side view, taken along a diametrical plane, of a twin-piston shock absorber, particularly for vehicle suspensions, according to the invention;

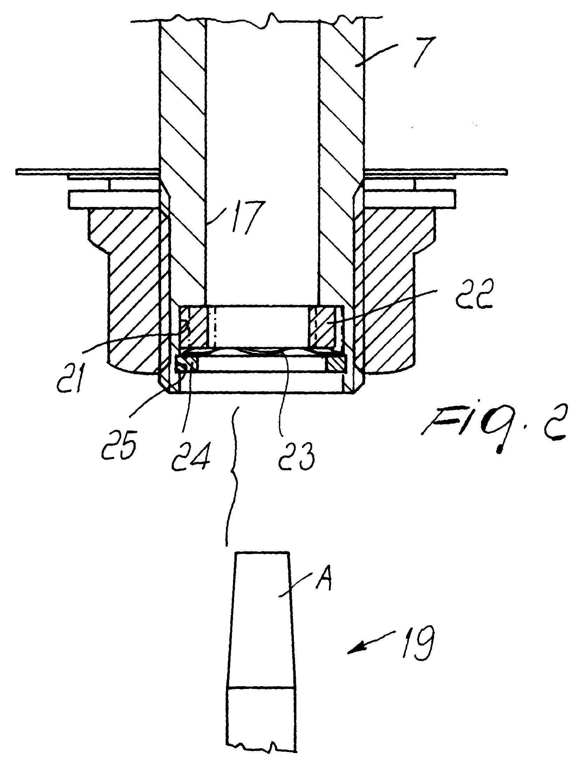

Figure 2 is an enlarged-scale sectional side view of a detail of the shock absorber of Figure 1.

With particular reference to the above figures, the reference numeral 1 generally designates a twin-piston shock absorber particularly for vehicle suspensions, according to the invention.

The shock absorber 1 comprises a cylinder 2 having, in its lower region, a threaded base 3 which is inserted hermetically in a corresponding threaded hole of a body 4 which is provided with an articulation eye 5.

A piston, generally designated by the reference numeral 6, is fitted in the cylinder 2 so that it can slide hermetically. Piston 6 is constituted by a stem 7 to the lower end of which a first end plate 10 and a second plate 11 are rigidly coupled between an upper disk 8 and a lower lock nut 9; the first and second plates are peripherally provided with annular seats for respective sealing rings 12 and 13 and are affected by ports 14 and by valve systems, constituted by deformable disks 15 and 16 which are made of a material such as very thin steel, in order to allow oil passage.

The stem 7 has, at its lower end, an axial hole 17 which is connected to an oil passage port 18 located between the plates 10 and 11.

The reference numeral 19 designates a conical pin which has frustum-shaped portions A, B, is provided with means 20 for axial fitting to the bottom of the cylinder 2 and enters the hole 17 of the stem when the shock absorber shortens: the gradual insertion of the conical pin 19 in the hole 17 of the stem 7 at the stroke limit of the piston in the cylinder causes a gradual hardening of the shock absorber.

An annular seat 21 having a certain depth is formed at the inlet of the hole 17 of the stem 7 to allow the transversely movable coupling of a self-centering bushing 22; an elastic washer 23 acts on the lower face of the bushing 22 and rests, in a downward region, against an elastic ring 24 of the type known as snap ring, which is accommodated in an annular seat 25 of the hole 17 of the stem 7; when the pin 19 is inserted in the bushing 22, the bushing can move radially and is arranged so that its axis coincides with the axis of the pin 19.

The means 20 for the axial fitting of the pin to the bottom of the cylinder comprise a plate 26 arranged at the lower end of the pin 19 and which is accommodated in a bush 27 fixed in a seat 28 of the body 4. The plate 26 is pushed by elastic means, which are constituted for example by Belleville spring washers 29, toward the bottom of the seat 28.

The reference numeral 30 generally designates means for adjusting the axial position of the plate, which comprise a pad 31 which is fitted so that it can slide axially in an extension 32, having a smaller diameter, of the seat 28 of the base of the plate; the base surface 33 of the pad 31 is inclined, and a pointed end 34a of an adjustment screw 34 engages against the base surface 33; the screw is screwed into an oblique hole formed in the body 4, and the tightening of the screw 34 lifts the pin 19 in order to modify one of the response characteristics of the shock absorber at the stroke limit.

It is noted that the invention allows, at a low cost, by means of the self-centering washer 22, perfect alignment of the pin 19 with the hole 17 of the stem 7 and, by means of the screw 34, adjustment from outside of the longitudinal arrangement of the stem 7 in the cylinder 2.

It has thus been observed that the invention achieves the intended aim and object.

The invention thus conceived is susceptible of numerous modifications and variations, all of which are within the scope of the inventive concept.

All the details may further be replaced with other technically equivalent ones.

In practice, the materials used, as well as the shapes and the dimensions, may be any according to requirements without thereby abandoning the protective scope of the appended claims.

The disclosures in Italian Patent Application No. BO99A000216 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A twin-piston shock absorber, particularly for vehicle suspensions, comprising a cylinder, a piston which is fitted so that it can slide hermetically in the cylinder and is constituted by a stem to the end of which a first end plate and a second plate are rigidly coupled, said first and second plates being affected by ports and by valve systems for the passage of the oil, said stem having, at its base, an axial hole which is connected to an oil passage port arranged between the first and second plates, and a conical pin which is provided with means for axial fitting on the bottom of the cylinder and is adapted to enter said hole of the stem, the gradual insertion of the conical pin in the hole of the stem at the stroke limit of the piston in the cylinder being adapted to produce a gradual hardening of the shock absorber, characterized in that at the inlet of the hole of the stem there is a seat for the transversely movable coupling of a self-centering bushing which, upon insertion of the pin, is adapted to be arranged so that its axis coincides with the axis of the pin.

2. The shock absorber according to claim 1, characterized in that said means for the axial fitting of the pin on the bottom of the cylinder comprise an end plate of the pin which is pushed by elastic means toward the bottom of a seat of the base of the cylinder in which means for adjusting the axial position of the plate are fitted.

3. The shock absorber according to claim 2, characterized in that said means for adjusting the axial position of the plate comprise a pad which is fitted so that it can slide axially in said seat of the base of the plate, the base of said pad being an inclined surface against which the end of an adjustment screw screwed into the body of said cylinder engages.
